# EUROPEAN PATENT APPLICATION

(11) **EP 4 691 601 A1**
(43) Date of publication of application: **11.02.2026**
(21) Application number: 23930757.2
(22) Date of filing: 21.09.2023
(51) Int. Cl.: B01D 53/14, C01B 32/50, B01J 19/00, C25B 3/03, C25B 3/05, C25B 3/07, C25B 3/09, C25B 3/26

(54) **CARBON DIOXIDE TREATMENT METHOD**

(30) Priority: 30.03.2023 JP 2023056128
(71) Applicant: E-Plus Co., Ltd, Takaishi-shi, Osaka 592-0012 (JP)
(72) Inventor: HIROTA, Takeji, Takaishi-shi Osaka 592-0012 (JP)
(74) Representative: Patentanwaltskanzlei Hinkelmann
(86) International application number: PCT/JP2023/034303
(87) International publication number: WO 2024/202126

(57) **Abstract**

The purpose of the present invention is to provide a novel carbon dioxide treatment method that allows for recovering carbon dioxide with a relatively small energy from a gas to be treated containing carbon dioxide. The method comprises executing: an absorption step in which carbon dioxide is dissolved in an alkaline aqueous solution containing an amine compound as a solute by bringing a gas to be treated into contact with the alkaline aqueous solution; a desorption step in which the dissolved carbon dioxide is desorbed by heating the alkaline aqueous solution; and a recovery step in which the desorbed carbon dioxide is recovered. When the desorption step is executed, the liquid temperature of the alkaline aqueous solution is raised to 50 to 100°C.

## Description

### TECHNICAL FIELD

The present invention relates to a carbon dioxide treatment method for recovering carbon dioxide from a gas to be treated containing carbon dioxide.

### BACKGROUND ART

The global warming phenomenon is a phenomenon caused by overlapping of various factors, and a theory that a greenhouse gas such as carbon dioxide (CO₂) emitted into the atmosphere accompanying human industrial activities is a major factor is mainstream. Therefore, reduction of the emission amount of carbon dioxide is an international problem. A means for recovering discharged carbon dioxide is also being studied.

As a means for recovering carbon dioxide, a method (chemical adsorption method) in which carbon dioxide is brought into contact with an alkaline aqueous solution containing an amine compound such as monoethanolamine as a solute to dissolve carbon dioxide in the aqueous solution, and then the carbon dioxide is recovered by a heat treatment is generally used. A means for dissolving carbon dioxide in an alkaline aqueous solution and then subjecting the solution to an electrolysis treatment to denature the carbon dioxide into an organic compound of about C₁ to C₂ such as methane or ethane has also been developed (for example, see Patent Document 1 below).

### PRIOR ART DOCUMENT

### PATENT DOCUMENT

Patent Document 1: Japanese Patent Laid-open Publication No. 2017-205718

### SUMMARY OF THE INVENTION

### PROBLEMS TO BE SOLVED BY THE INVENTION

For example, when carbon dioxide is introduced into an alkaline aqueous solution containing an amine compound having a chemical formula of RNH₂ (R: an alkyl group or an alkanol group) as a solute, first, a bond formation reaction (RNH₂ + CO₂ → RNH₂CO₂) between the amine compound and carbon dioxide occurs, and the carbon dioxide is dissolved in the alkaline aqueous solution by a subsequent proton desorption reaction (RNH₂CO₂ + H₂O → RNHCO₂⁻ + H₃O⁺). That is, when carbon dioxide is brought into contact with the amine compound, the amino group and the carbon dioxide form a urethane bond to form carbamate ions.

In the chemical adsorption method described above, carbon dioxide is selectively recovered by subjecting the alkaline aqueous solution to a heat treatment. The recovered carbon dioxide is, for example, buried underground in the state of liquefied carbon dioxide gas.

However, in order to desorb carbon dioxide from carbamate ions, a heat treatment at 120°C or higher is required. Therefore, in the chemical adsorption method, large thermal energy for desorbing carbon dioxide from the alkaline aqueous solution is required, and the treatment cost increases.

Meanwhile, also in the method described in Patent Document 2, since electrical energy is required at the time of the electrolysis treatment, it is difficult to treat a large amount of carbon dioxide only with such a treatment method.

The present invention has been developed to solve the above technical problems, and an object thereof is to provide a novel carbon dioxide treatment method capable of recovering carbon dioxide with a relatively small energy from a gas to be treated containing carbon dioxide.

### SOLUTIONS TO THE PROBLEMS

A carbon dioxide treatment method of the present invention for solving the above technical problems is a carbon dioxide treatment method for recovering carbon dioxide from a gas to be treated containing carbon dioxide, the method including: an absorption step of bringing a gas to be treated into contact with an alkaline aqueous solution containing an amine compound as a solute to dissolve carbon dioxide in the alkaline aqueous solution; a desorption step of desorbing the dissolved carbon dioxide by heating the alkaline aqueous solution; and a recovery step of recovering the desorbed carbon dioxide, in which a liquid temperature of the alkaline aqueous solution is raised to 50 to 100°C during the execution of the desorption step (hereinafter, referred to as "treatment method of the present invention").

In the treatment method of the present invention, it is a preferable aspect that the liquid temperature of the alkaline aqueous solution is maintained at 40°C or lower during the execution of the absorption step.

In the treatment method of the present invention, it is a preferable aspect that a high-temperature gas of 100°C or higher is selected as the gas to be treated, the liquid temperature of the alkaline aqueous solution is raised by heat exchange between the gas to be treated and the alkaline aqueous solution during the execution of the desorption step, and the gas to be treated whose temperature after the heat exchange has decreased is subjected to the absorption step.

In the treatment method of the present invention, it is a preferable aspect that the gas to be treated which is adjusted to 50°C or lower is subjected to the absorption step.

In the treatment method of the present invention, it is a preferable aspect to further include an electrolysis step of electrolyzing the alkaline aqueous solution in which carbon dioxide is dissolved.

### EFFECTS OF THE INVENTION

According to the present invention, it is possible to recover carbon dioxide with a relatively small energy from a gas to be treated containing carbon dioxide.

### BRIEF DESCRIPTION OF THE DRAWINGS

[Fig. 1] Fig. 1 is a schematic view illustrating an outline of a carbon dioxide treatment facility for executing a treatment method of the present invention.
[Fig. 2] Fig. 2 is a schematic view illustrating an outline of another carbon dioxide treatment facility for executing the treatment method of the present invention.
[Fig. 3] Fig. 3 is a schematic view illustrating an outline of still another carbon dioxide treatment facility for executing the treatment method of the present invention.

### EMBODIMENTS OF THE INVENTION

Hereinafter, an embodiment of the present invention will be described, but the present invention is not limited to this embodiment.

### <Treatment method of present invention>

In the treatment method of the present invention, an "absorption step", a "desorption step", and a "recovery step" are executed. In addition to the above steps, it is preferable to further execute an "electrolysis step".

### -Absorption step-

In the absorption step, a gas to be treated is brought into contact with an alkaline aqueous solution containing an amine compound as a solute to dissolve carbon dioxide in the alkaline aqueous solution. A means for blowing a gas to be treated containing carbon dioxide into an alkaline aqueous solution of this type to dissolve carbon dioxide in the gas to be treated in the alkaline aqueous solution is already known. Note that, since the binding reaction between the amine compound and carbon dioxide is an exothermic reaction, the liquid temperature of the alkaline aqueous solution during the execution of the absorption step is preferably maintained at 40°C or lower (more preferably 30°C or lower) in order to promote such a reaction.

In the treatment method of the present invention, the amine compound serving as the solute of the alkaline aqueous solution is not particularly limited. Examples of the amine compound include an alkylamine (monoalkylamine, dialkylamine, or trialkylamine) in which a hydrogen group of ammonia is substituted with an alkyl group or an alkanol group, an alkanolamine (monoalkanolamine, dialkanolamine, or trialkanolamine), and an alkylalkanolamine. Specific examples of the compound name include monoethanolamine, diethanolamine, triethanolamine, methyldiethanolamine, 2-amino-2-methyl-1-propanol, and piperazine. As for the concentration of the alkaline aqueous solution, the blending amount of the amine compound is preferably 20 to 50 wt% (more preferably 30 to 40 wt%).

Note that it has been confirmed that the dissolved amount of carbon dioxide is improved when an aqueous solution also containing a silicate such as sodium silicate or potassium silicate as a solute in addition to an amine compound is used as an alkaline aqueous solution. In this case, the blending ratio of the amine compound and the silicate is not particularly limited, but is preferably 1 to 10 parts by weight (preferably 2 to 5 parts by weight) of the silicate with respect to 100 parts by weight of the amine compound.

### -Desorption step-

In the desorption step, the dissolved carbon dioxide is desorbed by heating the alkaline aqueous solution. In the treatment method of the present invention, the liquid temperature of the alkaline aqueous solution is raised to 50 to 100°C during the execution of the desorption step.

Here, also in a conventional method (chemical adsorption method), a means for desorbing carbon dioxide by heating an alkaline aqueous solution in which carbon dioxide is dissolved has been adopted. However, in the conventional method, the liquid temperature of the alkaline aqueous solution raised by heating was not set to 100°C or lower. This is because a heating temperature of 120°C or higher is required to desorb carbon dioxide from carbamate ions generated when the amine compound and carbon dioxide are brought into contact with each other.

As a result of examination on this point, the present inventor has confirmed that 10 to 20% of the dissolved carbon dioxide is desorbed when the liquid temperature of the alkaline aqueous solution in which carbon dioxide is dissolved is raised to 50°C or higher, and more than 30 to 50% of the carbon dioxide is desorbed when the liquid temperature is raised to near 100°C. In this phenomenon, carbon dioxide dissolved in the alkaline aqueous solution has not only a dissolved state of carbamate ions, but also carbonate ions, a dissolved state due to a potential difference between the alkaline aqueous solution and carbon dioxide, and the like, and it is predicted that carbon dioxide is desorbed in order from carbon dioxide in a dissolved state having a high degree of freedom according to an increase in the liquid temperature of the alkaline aqueous solution.

That is, the treatment method of the present invention does not target the desorption of all the carbon dioxide dissolved in the alkaline aqueous solution by the desorption step, but targets the desorption of about 10 to 50% of the carbon dioxide dissolved in the alkaline aqueous solution. As a result, there is an advantage that the thermal energy for raising the liquid temperature of the alkaline aqueous solution is reduced as compared with the conventional method.

### -Recovery step-

In the recovery step, the desorbed carbon dioxide is recovered. The recovered carbon dioxide is, for example, buried underground in the state of liquefied carbon dioxide gas.

### -Electrolysis step-

In the electrolysis step, the alkaline aqueous solution in which carbon dioxide is dissolved is electrolyzed (that is, two electrodes (an anode and a cathode) are brought into contact with the alkaline aqueous solution to apply a voltage between the electrodes). Note that the electrolysis step may be executed during or after the absorption step, or may be executed during or after the desorption step.

It has been confirmed that when an inter-electrode voltage is applied so that the value of the electrolytic current is 400 A or less (preferably 150 to 300 A) during the execution of the electrolysis step, carbon dioxide dissolved in the alkaline aqueous solution is denatured into a substance that can remain in the alkaline aqueous solution, such as 2-morpholinoethanol or oxazolidine-2-one. On the other hand, it has been confirmed that when the value of the electrolytic current exceeds 400 mA during the execution of the electrolysis step, carbon dioxide dissolved in the alkaline aqueous solution is denatured into an organic compound of about C₁ to C₂ such as methane or ethane. Therefore, when the electrolysis step is executed, a part of the carbon dioxide dissolved in the alkaline aqueous solution can be denatured into another substance and recovered.

### <Embodiment>

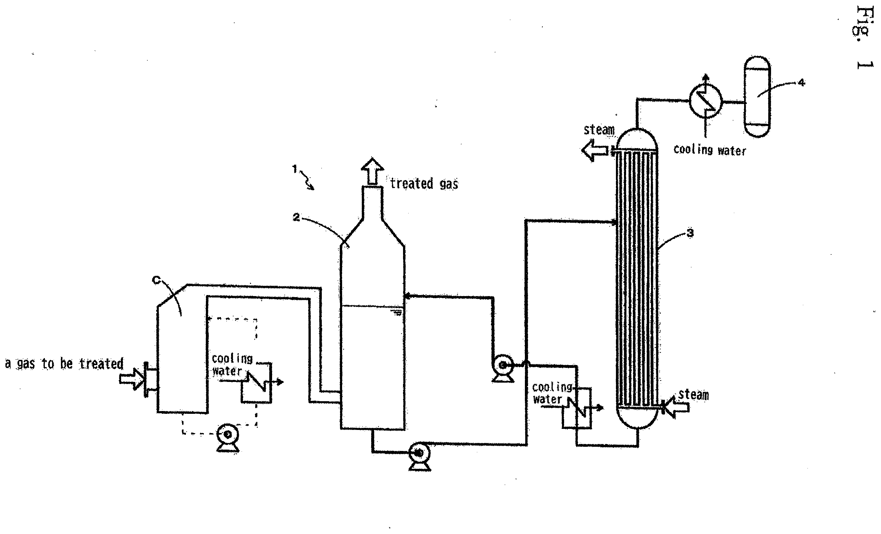

Fig. 1 illustrates an outline of a carbon dioxide treatment facility 1 for executing the treatment method of the present invention. The carbon dioxide treatment facility 1 includes an "absorption tower (2)", a "desorption tower (3)", and a "recovery container (4)".

### -Absorption tower 2-

The absorption tower 2 has an internal space in which an alkaline aqueous solution is stored, and plays a role of dissolving carbon dioxide contained in the gas to be treated in the alkaline aqueous solution by introducing the gas to be treated from below the tower. That is, the absorption tower 2 is a facility for executing the absorption step in the treatment method of the present invention. The gas to be treated (treated gas) whose carbon dioxide content has been reduced by passing through the alkaline aqueous solution is discharged from the upper part of the absorption tower 2.

Note that, in the present embodiment, a high-temperature gas of 100°C or higher (for example, factory exhaust gas at 150 to 250°C) is assumed as the gas to be treated. Therefore, in order to improve the dissolution efficiency of carbon dioxide in the alkaline aqueous solution in the absorption tower 2, the temperature of the gas to be treated is reduced to 50°C or lower by passing the gas to be treated through a cooling device (C) at a stage before being introduced into the absorption tower 2. The absorption tower 2 is also equipped with a cooling jacket (not illustrated), and the absorption tower 2 is controlled so that the liquid temperature of the alkaline aqueous solution stored therein during operation does not exceed 40°C (more preferably 30°C or lower).

### -Desorption tower 3-

The desorption tower 3 has an internal space into which an alkaline aqueous solution in which carbon dioxide is dissolved can be introduced, and plays a role of desorbing the dissolved carbon dioxide by raising the liquid temperature of the alkaline aqueous solution to 50 to 100°C. That is, the desorption tower is a facility for executing a desorption step in the treatment method of the present invention. In the present embodiment, by allowing steam to pass through the piping arranged in the desorption tower 3, the liquid temperature of the alkaline aqueous solution introduced into the desorption tower 3 is controlled to be 50 to 100°C (more preferably, 60 to 80°C). The alkaline aqueous solution introduced into the desorption tower 3 is cooled and returned to the absorption tower 2 after desorption of carbon dioxide by heating.

Note that, although carbon dioxide that has not been desorbed is dissolved in the alkaline aqueous solution returned to the absorption tower 2, carbon dioxide absorption capacity corresponding to the volume of the desorbed carbon dioxide remains. That is, assuming that the carbon dioxide absorption capacity of the initial alkaline aqueous solution is 100 and the desorption amount of carbon dioxide in the desorption tower 3 is 40, it has been confirmed that the carbon dioxide absorption capacity of the alkaline aqueous solution returned to the absorption tower 2 is 40. It has been confirmed that, when carbon dioxide is desorbed in the desorption tower 3 after carbon dioxide having a volume of 40 is absorbed in the alkaline aqueous solution reused in the absorption tower 2, the desorption amount thereof is 40.

### -Recovery container 4-

The recovery container 4 plays a role of storing carbon dioxide desorbed from the alkaline aqueous solution in the desorption tower 3. That is, the recovery container 4 is a facility for executing a modification step in the treatment method of the present invention. In the present embodiment, a portable high-pressure gas container (cylinder) is used as the recovery container 4.

The carbon dioxide treatment facility 1 having the above configuration is a facility for recovering carbon dioxide contained in a large amount of gas to be treated, such as exhaust gas discharged from a factory. In the carbon dioxide treatment facility 1, carbon dioxide absorbed in the alkaline aqueous solution in the absorption tower 2 is desorbed at a relatively low temperature of 50 to 100°C in the desorption tower 3, so that carbon dioxide can be recovered with less thermal energy.

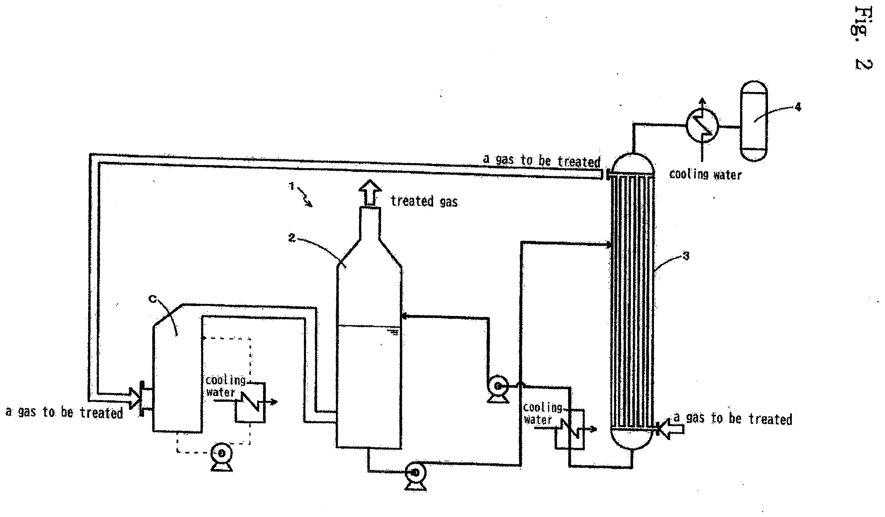

In the present embodiment, steam is used as a heat source for raising the liquid temperature of the alkaline aqueous solution introduced into the desorption tower 3, but the heat source for raising the liquid temperature of the alkaline aqueous solution is not particularly limited. For example, in a case where a high-temperature gas of 100°C or higher is selected as the gas to be treated, as illustrated in Fig. 2, when the liquid temperature of the alkaline aqueous solution is raised by heat exchange between the gas to be treated and the alkaline aqueous solution in the desorption tower 3, and the gas to be treated whose temperature after the heat exchange has decreased is introduced into the absorption tower 2, the thermal energy for raising the liquid temperature of the alkaline aqueous solution is further reduced.

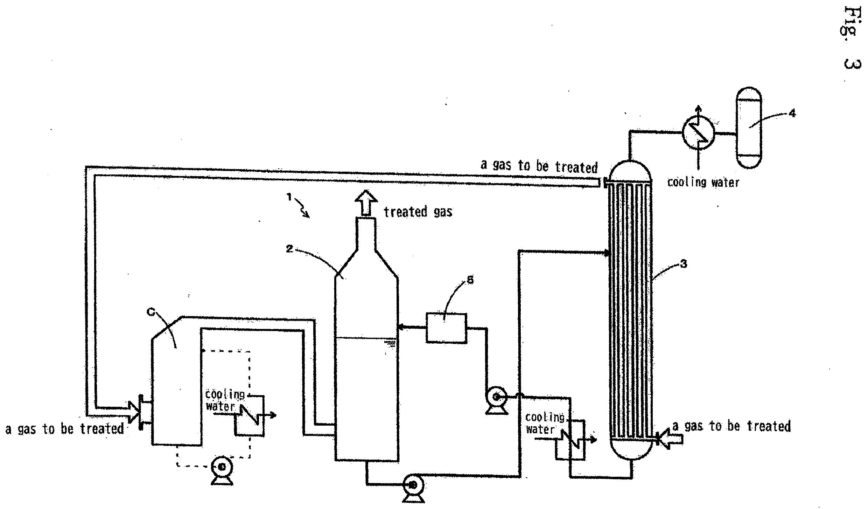

As illustrated in Fig. 3, when the electrolysis treatment apparatus 5 is provided in the circulation path of the alkaline aqueous solution and the alkaline aqueous solution is subjected to an electrolysis treatment, a part of carbon dioxide dissolved in the alkaline aqueous solution can be denatured into another substance. It has been confirmed that when a part of carbon dioxide dissolved in the alkaline aqueous solution is denatured into another substance by the electrolysis treatment, the carbon dioxide absorption capacity of the alkaline aqueous solution reused in the absorption tower 2 is improved.

### <Examples>

### -Alkaline aqueous solution-

The following Table 1 shows formulations of alkaline aqueous solutions according to Examples 1 to 5 and an amine solution according to Comparative Example (under a temperature condition of 25°C). Note that, in the table, "MEA" means monoethanolamine, "DEA" means diethanolamine, and "TEA" means triethanolamine.

**[Table 1]**

| | MEA | DEA | TEA | Water | Carbon dioxide absorption capacity |
|---|---|---|---|---|---|
| Example 1 | 20 ml | - | - | 80 ml | 2.0 mol/l |
| Example 2 | 50 ml | - | - | 50 ml | 3.0 mol/l |
| Example 3 | - | 40 ml | - | 60 ml | 2.6 mol/l |
| Example 4 | - | - | 40 ml | 60 ml | 2.4 mol/l |
| Example 5 | 20 ml | | 20 ml | 60 ml | 2.8 mol/l |
| Comparative Example | 100 ml | - | - | - | 7.6 mol/l |

### -Carbon dioxide absorption step-

A high-concentration carbon dioxide gas (99.9%) was enclosed in an aluminum bag B, and introduced (bubbled) into the alkaline aqueous solution according to each Example (and the monoethanolamine liquid according to Comparative Example) using a tubing pump. Note that the carbon dioxide gas was introduced at an introduction rate of 13.0 ml/min for 90 minutes under the condition of a liquid temperature of 40°C. As a result, the carbon dioxide absorption capacity shown in Table 1 was confirmed for each alkaline aqueous solution (and the monoethanolamine liquid).

### -Desorption step and recovery step-

Carbon dioxide was desorbed by raising the liquid temperature of the alkaline aqueous solution according to each Example (and the monoethanolamine liquid according to Comparative Example) in which carbon dioxide was dissolved, the desorbed carbon dioxide was recovered, and the desorption amount of carbon dioxide at each liquid temperature was measured. The results are shown in Table 2 below.

**[Table 2]**

| | Desorption amount (cumulative) % | | | | |
|---|---|---|---|---|---|
| Liquid temperature | (40°C →) 50°C | 60°C | 70°C | 80°C | 100°C |
| Example 1 | 5 | 10 | 18 | 25 | 30 |
| Example 2 | 6 | 12 | 19 | 29 | 33 |
| Example 3 | 8 | 16 | 22 | 33 | 38 |
| Example 4 | 9 | 17 | 23 | 35 | 40 |
| Example 5 | 13 | 25 | 33 | 50 | 55 |
| Comparative Example | < 1 | < 1 | < 1 | < 1 | < 1 |

As can be seen from the results shown in Table 2, the carbon dioxide dissolved in the alkaline aqueous solution according to each Example was desorbed from the alkaline aqueous solution as the liquid temperature was raised, and the desorption amount was confirmed to be 25 to 50% until the liquid temperature was raised to 80°C, and 30 to 55% when the liquid temperature was raised to 100°C.

On the other hand, as for carbon dioxide dissolved in the monoethanolamine liquid, desorption was not confirmed at all even when the liquid temperature was raised to 100°C.

From this, it was confirmed that carbon dioxide can be recovered with a relatively small energy from a gas to be treated containing carbon dioxide according to the treatment method of the present invention.

Note that the present invention can be implemented in other various forms without departing from the spirit or main features thereof. For this reason, the embodiments described above are only examples in every aspect, and should not be construed in the sense of limitation. The scope of the present invention is represented by the appended claims, and is not restricted to this specification at all. Further, all changes and modifications included within a scope equivalent to the scope of the appended claims are within the present invention.

### INDUSTRIAL APPLICABILITY

The present invention can be suitably used as a means for recovering carbon dioxide in a gas to be treated.

### DESCRIPTION OF REFERENCE SIGNS

1: Carbon dioxide treatment facility
2: Absorption tower
3: Desorption tower
4: Recovery container
5: Electrolysis treatment apparatus

## Claims

1. A carbon dioxide treatment method for recovering carbon dioxide from a gas to be treated containing carbon dioxide, the method comprising:
an absorption step of bringing a gas to be treated into contact with an alkaline aqueous solution containing an amine compound as a solute to dissolve carbon dioxide in the alkaline aqueous solution;
a desorption step of desorbing the dissolved carbon dioxide by heating the alkaline aqueous solution; and
a recovery step of recovering the desorbed carbon dioxide,
wherein a liquid temperature of the alkaline aqueous solution is raised to 50 to 100°C during the execution of the desorption step.

2. The carbon dioxide treatment method according to claim 1, wherein the liquid temperature of the alkaline aqueous solution is maintained at 40°C or lower during the execution of the absorption step.

3. The carbon dioxide treatment method according to claim 1 or 2, wherein
a high-temperature gas of 100°C or higher is selected as the gas to be treated,
the liquid temperature of the alkaline aqueous solution is raised by heat exchange between the gas to be treated and the alkaline aqueous solution during the execution of the desorption step, and
the gas to be treated whose temperature after the heat exchange has decreased is subjected to the absorption step.

4. The carbon dioxide treatment method according to claim 3, wherein the gas to be treated which is adjusted to 50°C or lower is subjected to the absorption step.

5. The carbon dioxide treatment method according to claim 1, further comprising an electrolysis step of electrolyzing the alkaline aqueous solution in which carbon dioxide is dissolved.
